Europäisches Patentamt

European Patent Office

Office européen des brevets

(11) Publication number: **0 273 910**
**B1**

(12) EUROPEAN PATENT SPECIFICATION

(45) Date of publication of patent specification: **11.04.90**

(51) Int. Cl.⁵: **B 23 B 35/00, B 23 B 39/06**

(21) Application number: **86905466.8**

(22) Date of filing: **25.08.86**

(86) International application number:
**PCT/SE86/00378**

(87) International publication number:
**WO 87/01633 26.03.87 Gazette 87/07**

(54) **ADAPTER FOR POSITIONING AND HOLDING AUXILIARY DEVICES, E.G. JAW VICES, ON MACHINE TOOLS, PARTICULARLY COLUMN DRILLING MACHINES.**

(30) Priority: **20.09.85 SE 8504356**

(43) Date of publication of application:
**13.07.88 Bulletin 88/28**

(45) Publication of the grant of the patent:
**11.04.90 Bulletin 90/15**

(84) Designated Contracting States:
**AT BE CH DE FR GB IT LI LU NL SE**

(56) References cited:
**CH-A- 323 066**
**GB-A- 981 499**

(73) Proprietor: **Lindkvist, Gunnar Harry**
**Södra vägen 41**
**S-824 00 Hudiksvall (SE)**

(72) Inventor: **Lindkvist, Gunnar Harry**
**Södra vägen 41**
**S-824 00 Hudiksvall (SE)**

(74) Representative: **Rostovanyi, Peter et al**
**AWAPATENT AB Box 5117**
**S-200 71 Malmö (SE)**

## Description

### Background of the invention

When holes are to be drilled in work pieces by means of a column drilling machine, the holes are positioned on one hand by swinging the swinging arm of the machine relative to its associated column and, on the other hand, by rotating the drilling table relative to the swinging arm. For each hole positioning at least six different work elements or working moments are necessary, namely loosening the clamp connections for the drilling table and the swinging arms respectively, adjusting the hole position by rotation of the drilling table and the swinging arm respectively, and re-tightening the two clamp connections in question. In addition to this, the clamp connection between the column and the swinging arm may be difficult to reach in larger machines and the large mass of said details makes the adjustment heavy and jerky. The hole positions may change at the tightening which means that sometimes all six work elements have to be repeated. In addition to this some holes may happen to be located outside of the adjustment area of the drilling table. The jaw vices in question will then have to be moved. If the work piece to be worked involves a great number of holes, the operator is forced to an unreasonably large number of work elements just for the re-positionings. The consequence of this will in practice be that the operator instead of this holds the loose jaw vice by hand and hopes for the best if it should occur that the drill sticks. The work piece may possibly be held by a pair of tongs or even by directly with the hand. To hold a workpiece manually in this way during a drilling operation entails extremely great risks for injuries of different kinds.

### Brief description of the inventive concept

The present invention aims to remove the above drawbacks in conventional work tables for column drilling machines and to create a simple and cheap adapter by means of which the task of positioning a work piece radically can be rendered more effective and rapid. To this purpose the adapter according to the invention is characterized in that it comprises on one hand a support having a base part attachable to the machine and two mutually spaced-apart shanks projecting upwardly from said base part and carrying a preferably endless, for instance square or circular frame at a distance above said base part and on the other hand a plate or plate-shaped part located on the frame and connected to an arm by means of a connecting element projecting downwardly, preferably centrally from said plate, said arm being situated below the frame and having a length that that is markedly greater than the breadth or diameter of the frame, and that the arm and the plate are movable to and from each other by means of a tightening device in order to, on one hand, in a position close to each other, clamp the plate against the frame and on the other hand, in a position distanced from each other, allow the free movement of the plate to desired positions relative to the frame.

Although the invention will be described below in connection with a column drilling machine it is understood that it can be applied onto any optional tool machine at which there is a need to be able to quickly and simply position and hold a work piece in a desired position.

### Further elucidation of the state of the art

A device for a rapid clamping of work pieces on the drilling table of column drilling machines is disclosed in US-A- 4260307. This device is however extremely complicated and expensive to manufacture which has resulted in that it has seldom been used in practice.

### Brief description of the attached drawings

In the drawings Fig 1 is a perspective view showing a column drilling machine whereon the adapter according to the invention has been mounted, Fig. 2 a partly sectioned, enlarged perspective view showing the adapter according to the invention, Fig. 3 a schematic top view showing different adjustment positions of the adapter, Fig. 4 a partly sectioned side view illustrating the adapter according to the invention with its plate in a freed condition, Fig. 5 a similar, although halved, view showing the plate of the adapter in a clamped condition, Fig. 6 a frontal view and Fig. 7 an enlarged side view showing a detail of the invention.

### Detailed description of a preferred embodiment of the invention

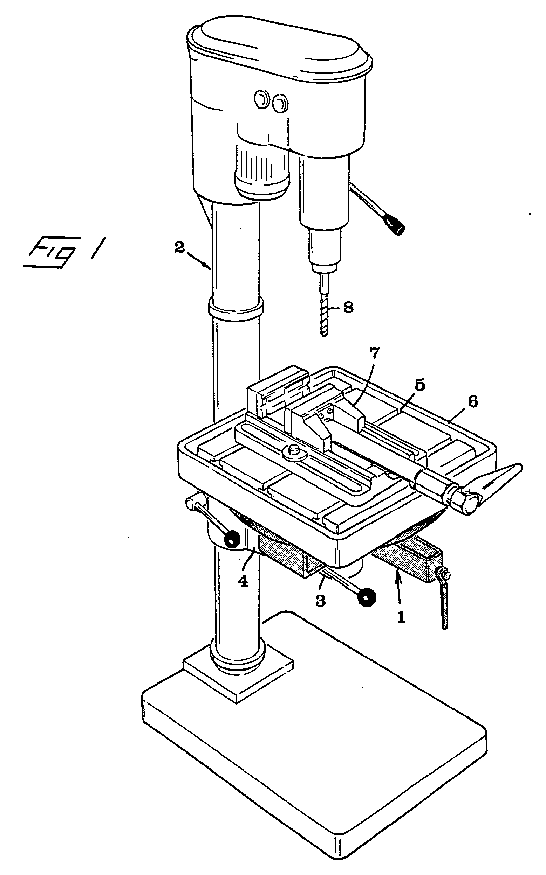

In Fig. 1 1 generally denotes an adapter made in accordance with the invention and being mounted onto a tool machine in the form of a column drilling machine 2. More specifically, the adapter 1 is inserted between the clamping ring or clamping connection 3 of the swinging arm 4 of the machine and a work table 6 provided with holding slots 5, onto which in turn jaw vice 7 is mounted. The drill of the machine is designated 8.

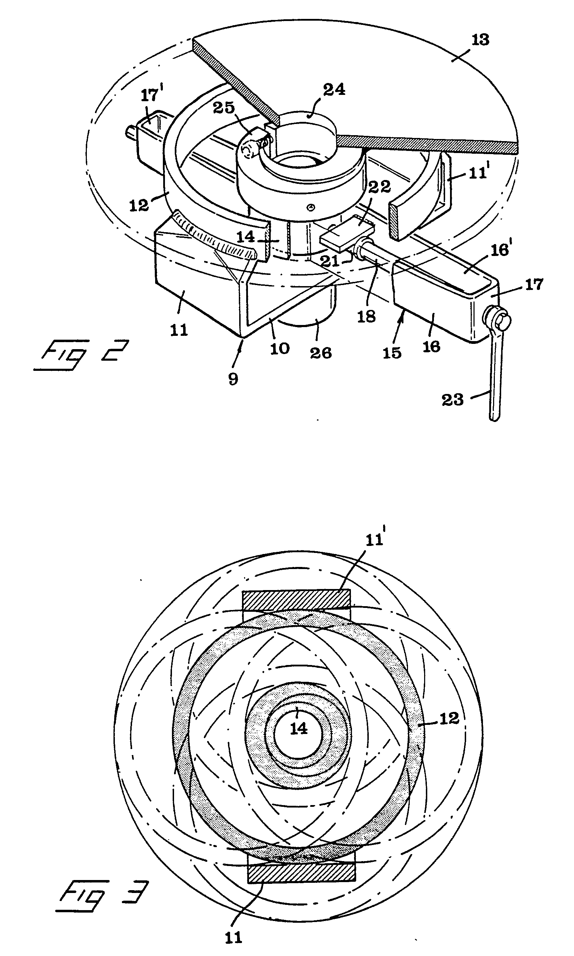

Reference is now made to Figs. 2-5 that in detail illustrate the adapter according to the invention. As an essential part a support, in its entirety denoted with 9, is included comprising on one hand a base part 10 and on the other hand two mutually spaced-apart shanks 11, 11' projecting upwardly from said base part and carrying a preferably, although not necessarily endless frame 12. In the example shown this frame has a circular shape, but it can also have another geometrical shape, e.g quadrangular or rectangular. The frame 12 will be carried at a marked distance above the base part 10 by the presence of the shanks 11, 11'.

A plate or plate-shaped part 13 is located on the frame 12 and is connected to an arm 15 by means of a connecting element generally designated 14 and projecting downwardly, preferably centrally from said plate, said arm being situated below the frame and having a length that is markedly greater than the diameter of the ring-shaped frame 12. In the eample shown the arm 15 is composed of two mutually separated side pieces 16, 16' and two end pieces 17,17', connecting the side pieces to each other. A shaft 18 is rotatably journalled in the end pieces 17, 17' and has an eccentric body or part 19 serving as a tightening device and engaging crosswisely through-going holes 20 in the above-mentioned connecting element 14. The shaft 18, or more specifically a bushing 21 applied thereon, is supported on both sides of the connecting element 14 by the under side of a supporting plate 22 extending between the side pieces 16, 16'. The shaft 18 is rotatable by means of a handle 23.

In the example shown the connecting element 14 is in the form of a sleeve which is welded onto the underside of the plate 13 and placed concentrically to a central hole 24 in the plate 13. The hole 24 and the sleeve 14 are arranged to together receive an attachment pin (not shown) projecting downwardly from the holding slot or T-slot table 6. This attachment pin can be clamped in the socket formed by the hole and the sleeve by means of a clamping ring 25 of a per se known kind. An attachment pin 26 is arranged on the underside of the base part 10 of the support 9 and is intended to be inserted into and clamped in the clamping ring 3 of the swinging arm 4 of the drilling machine.

In Figs. 6 and 7 it is illustrated how the length of the pin 26 can be somewhat greater than the heigth of the clamping ring 3, a per se known hole-provided index disc 27 being attached to a downwardly projecting end part of the pin and arranged to co-operate with a locking pin 28 fixedly attached to the clamping ring and which can be brought into engagement with a hole as desired in the index disc. Since the index disc 27 is torsionally rigidly connected to the pin 26, the carrying plate 13 can be rotated to a desired rotational angular position in relation to the clamping ring in a simple and smooth manner, for instance when holes are drilled in flanges and similar.

The function and advantages of the adapter according to the invention

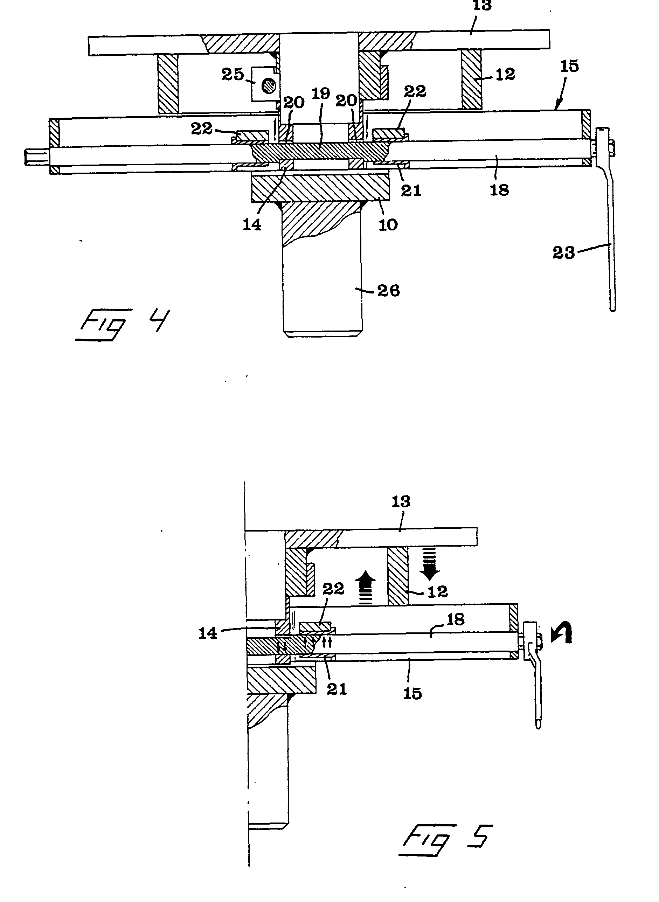

In Fig. 4 the shaft 18 is shown adjusted into a position wherein the excentric part 19 thereof is loosely fitted into the through-going holes 20 in the connecting sleeve 14. The arm 15 is in this condition situated at some distance below the frame 12, meaning that the plate 13 is free to be moved in relation to the frame into positions that can be chosen infinitely variably in relation to this. Only the diameter of the frame 12 limits the possibilities of movement of the plate.

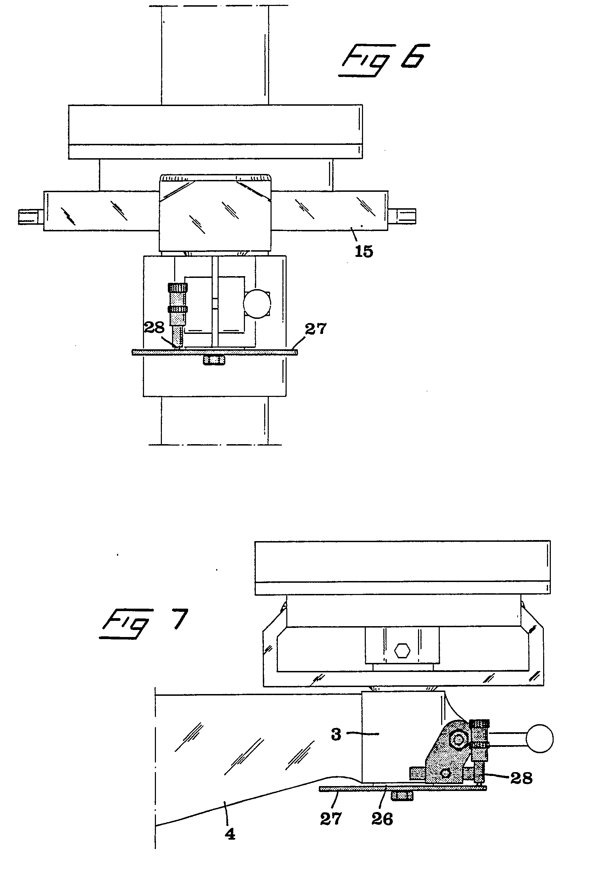

When the plate 13 has been positioned in the desired position in relation to the frame, the shaft 18 is rotated, for instance 1/4 turn by tightening the handle 23. The eccentric part 19 will hereby effect that the arm 15 is lifted and clamped against the underside of the frame 12 as illustrated in Fig. 5. More specifically, the frame is pressed or clamped between the plate and the arm in the two widely separated points of the arm that contact the underside of the frame 12. In this condition the plate 13 is fixed in an immovable relation to the swinging arm 4 and thereby also the table 6 and the jaw vices 7 so that a drilling operation can be carried out. The drilling having been carried out, the plate can simply be loosened just by the simple measure of rotating the handle 23 back to the initial position, whereupon the plate and thus also the work piece is free to be moved to the next position and to be fixed again.

An essential advantage of the adapter according to the invention is that it, in spite of a desirable simplicity and cheapness, allows an extremely rapid positioning and fixing of the work piece in question, the clamping of the plate 13 being at the same time very stable thanks to the contact in two points that is obtained between the arm 15 and the frame 12. A particular advantage is offered by the centrally situated attachment pin 26, particularly in combination with the index disc 27, insofar that a work piece that has been given a certain position in relation to the plate 13 simply can be rotated to a new adjustment position and fixed by means of the clamping ring 3, all this whilst maintaining a desired radius between the drill 8 and the centre of the pin 26.

Possible modifications of the invention

It is evident that the invention is not limited to only the embodiment as described and shown in the drawings. Thus it is for instance possible to provide the plate 13 with means for direct reception of the jaw vices in question or other optional auxiliary devices without the use of the holding slot table 6 as shown. It should further be pointed out that the invention is applicable not only to column drilling machine but also to other optional machine tools. Other types of tightening devices can also be used in order to effect the closing to, respectively distancing from, the plate 13 of the arm 15 than just a shaft shaped with an eccentric part.

**Claims**

1. Adapter for positioning and holding of auxiliary devices, e.g. jaw vices, on machine tools, particularly column drilling machines, comprising on one hand a support (9) having a base part (10) attachable to a machine and two mutually spaced-apart shanks (11, 11') projecting upwardly from said base part and carrying a preferably endless, for instance square or circular frame (12) at a distance above said base part (10), and on the other hand a plate or plate-shaped part (13) located on the frame and connected to an arm (15) by means of a connecting element (14) projecting downwardly preferably centrally from said plate, said arm being situated below the frame and having a length that is markedly greater than the breadth or diameter of the frame, and in that the arm and the plate are movable to and from each other by means of a tightening device in order to, on one hand in a position close to each other, clamp the plate against the frame and on the other hand, in a position distanced from each other, allow the free movement of the plate to desired positions relative to the frame.

2. Adapter according to claim 1, whereby the arm (15) includes two side pieces (16, 16') connected by end pieces (17, 17') between which a shaft (18) is located being rotatably journalled in the end pieces and having an eccentric body or part serving as tightening device and engaging a crosswise passage (20) through the connecting element (14) between the plate (13) and the arm (15).

3. Adapter according to claim 1 or 2, whereby said connecting elements consists of a sleeve (14) having a socket ending in the upper side of the plate (3) and a clamping ring (25) associated thereto for the clamping of an attachment pin of a work table (6) being provided with holding slots that in turn can receive the auxiliary device (7) in question.

4. Adapter according to any one of the preceding claims, whereby a downwardly projecting pin (26) is attached to the under-side of the base part (10) of the support (9) for the engagement with a clamping ring (3), as customary arranged in the swinging arm (4) of a column drilling machine.

5. Adapter according to claim 4, the length of the pin (26) is greater than the height of the clamping ring (3) and that, on an end part of the pin projecting downwards from the ring, a per se known index disc is arranged being arranged to cooperate with a locking pin (28) fixedly attached to the clamping ring (3).

**Patentansprüche**

1. Adapter zum Positionieren und Halten von Hilfseinrichtungen, zum Beispiel Maschinenschraubstöcken an Werkzeugmaschinen, insbesondere Ständerbohrmaschinen, umfassend teils einen Bügel (9) mit einem an einer Maschine montierbaren Unterteil (10) und zwei voneinander getrennten und vom Unterteil hochragenden Schenkeln (11, 11'), die einen vorzugsweise endlosen, beispielsweise vierkantigen oder kreisförmigen Rahmen (12) im Abstand oberhalb des Unterteils (10) tragen, und teils eine auf dem Rahmen angebrachte Scheibe oder einen scheibenförmigen Teil (13), der mittels eines vorzugsweise zentral von der Scheibe nach unten ragenden Verbindungsgliedes (14) mit einem Arm (15) verbunden ist, der sich unterhalb des Rahmens befindet und eine Länge hat, die wesentlich grösser ist als die Breite oder der Durchmesser des Rahmens, wobei der Arm und die Scheibe mittels einer Spannvorrichtung im Verhältnis zueinander beweglich sind, einerseits um in einer zusammengeführten Lage die Scheibe gegen den Rahmen zu spannen und andererseits in einer auseinandergeführten Lage eine freie Bewegung der Scheibe in erwünschte Stellungen im Verhältnis zum Rahmen zu ermöglichen.

2. Adapter nach Anspruch 1, bei dem der Arm (15) zwei durch Endstücke (17, 17') verbundene Seitenstücke (16, 16') umfasst, zwischen denen eine in den Endstücken drehbar gelagerte Achse (18) angebracht ist, die einen als Spannvorrichtung dienenden Exzenter besitzt, der in eine querverlaufende Durchführung (20) durch das Verbindungsglied (14) zwischen der Scheibe (13) und dem Arm (15) eingreift.

3. Adapter nach Anspruch 1 oder 2, bei dem das Verbindungsglied aus einer Hülse (14) mit einer in der Oberseite der Scheibe (3) mündenden Fassung und einem damit verbundenen Spannring (25) zum Festspannen eines Befestigungszapfens eines Arbeitstisches (6) besteht, der Halteschlitze aufweist, welche ihrerseits die infragestehende Hilfseinrichtung (7) aufnehmen können.

4. Adapter nach einem der vorhergehenden Ansprüche, bei dem an der Unterseite des unteren Teils (10) des Bügels (9) ein nach unten vorstehender Zapfen (26) angebracht ist, der mit einem Spannring (3) eingreift, welcher in üblicher Weise im Schwenkarm einer Ständerbohrmaschine angeordnet ist.

5. Adapter nach Anspruch 4, bei dem die Länge des Zapfens (26) grösser ist als die Höhe des Spannrings (3), und dass an einem Endteil des vom Ring nach unten ragenden Zapfens eine an sich bekannte Indexscheibe vorgesehen ist, die mit einem am Spannring (3) fest montierten Sperrstift (28) zusammenwirkt.

**Revendications**

1. Adaptateur de positionnement et de maintien de dispositifs auxiliaires, par exemple d'étaux à mâchoires, sur machines-outils, notamment des perceuses à colonne, comportant d'une part un support (9) présentant une partie de base (10) qui peut être fixée sur une machine et deux rabats (11, 11') qui sont mutuellement espacés l'un de l'autre, font saillie vers le haut depuis ladite partie de base et portent un cadre (12), de préférence sans fin, par exemple carré ou circulaire, à une certaine distance au-dessus de ladite partie de base (10); et d'autre part un plateau, ou une pièce (13) en forme de plateau, placé sur le cadre et relié à un bras (15) au moyen d'un élément de liaison (14) qui fait saillie vers le bas, de préférence au centre, depuis ledit plateau, ledit bras étant situé sous le cadre et ayant une longueur notablement supérieure à la largeur ou au diamètre du cadre; et le bras et le plateau peuvent se déplacer en direction l'un de l'autre et en s'éloignant l'un de l'autre au moyen d'un dispositif de serrage pour, d'une part, dans une position proche l'un de l'autre, brider le plateau contre le cadre et, d'autre part, dans une position écartée l'un de l'autre, autoriser le libre déplacement du plateau pour venir à la position désirée par rapport au cadre.

2. Adaptateur selon la revendication 1, dans lequel le bras (15) comporte deux pièces latérales (16, 16') reliées par des pièces d'extrémité (17, 17') entre lesquelles est située une tringle (18) qui est portée, avec liberté de rotation, dans les pièces d'extrémité et qui présente un corps ou partie excentrique qui sert de dispositif de serrage et qui vient en prise avec un passage transversal (20) dans l'élément de liaison (14), entre le plateau (13) et le bras (15).

3. Adaptateur selon la revendication 1 ou 2, dans lequel lesdits éléments de liaison sont constitués d'un manchon (14) présentant un réceptacle qui se termine dans la face supérieure du plateau (3) et d'un anneau de bridage (25) qui lui est associé pour le bridage d'une broche de fixation d'une table de travail 56) munie de rainures de maintien qui, à leur tour, peuvent recevoir le dispositif auxiliaire (7) en question.

4. Adaptateur selon l'une quelconque des revendications précédentes, dans lequel une broche (26), faisant saillie vers le bas, est fixée à la face inférieure de la partie de base (10) du support (9) pour venir en prise avec un anneau de bridage (3) tel qu'il est habituellement disposé dans le bras pivotant (4) d'une perceuse à colonne.

5. Adaptateur selon la revendication 4, dans lequel la longueur de la broche (26) est supérieure à la hauteur de l'anneau de bridage (3) et dans lequel, sur une partie d'extrémité de la broche qui fait saillie vers le bas depuis l'anneau, un disque d'avance pas à pas, connu en soi, est disposé pour collaborer avec une broche de verrouillage (28) solidaire de l'anneau de bridage (3).

Fig 1

Fig 2

Fig 3

Fig 4

Fig 5

Fig 6

15

28

27

Fig 7

3

28

27

26

4